# FASCICULE DE BREVET EUROPEEN

(11) **EP 3 598 246 B1**
(45) Date de publication et mention de la délivrance du brevet: **21.04.2021**
(21) Numéro de dépôt: 18184764.1
(22) Date de dépôt: 20.07.2018
(51) Int. Cl.: G04D 7/00, G04B 47/06

(54) **MONTRE COMPRENANT UN DISPOSITIF DE MESURE DU DEGRE D'HUMIDITE RELATIVE A L'INTERIEUR DE SA BOITE**
ARMBANDUHR, DIE EINE MESSVORRICHTUNG DES RELATIVEN FEUCHTIGKEITSGRADS IM INNERN IHRES GEHÄUSES UMFASST
WATCH COMPRISING A DEVICE FOR MEASURING THE DEGREE OF RELATIVE HUMIDITY INSIDE ITS CASE

(43) Date de publication de la demande: 22.01.2020
(73) Titulaire: The Swatch Group Research and Development Ltd, 2074 Marin (CH)
(72) Inventeur: Tortora, Pierpasquale, 2000 Neuchâtel (CH)
(74) Mandataire: ICB SA

(56) Documents cités:
- CH-A- 328 663
- CH-A2- 708 942
- CN-U- 203 191 704

## Description

### DOMAINE TECHNIQUE DE L'INVENTION

L'invention concerne une montre comprenant une boîte de montre, la boîte de montre comportant un dispositif de mesure du degré d'humidité relative à l'intérieur de la montre.

L'invention concerne également un ensemble de mesure du degré d'humidité relative à l'intérieur de la montre, comprenant un dispositif d'émission et de réception de lumière ainsi que la montre.

### ETAT DE LA TECHNIQUE

L'étanchéité d'une montre est mesurée en bars (le bar est une unité de pression, 1 bar équivalant à 1 atmosphère (atm). Le degré d'étanchéité d'une montre est souvent indiqué en mètres (m). Les montres désignées comme étanches sont destinées à une utilisation quotidienne courante qui doit garantir une résistance à l'eau, dans des activités telles que par exemple la natation, ou plus simplement sous la douche. Les montres dites de plongée doivent respecter des normes plus strictes, et garantir selon la norme actuelle l'étanchéité à une profondeur minimum de 100 m.

Pour garantir l'étanchéité, les montres sont en général munies d'un jeu de joints d'étanchéité positionnés dans les points d'assemblage de certaines pièces de la montre, telles que la glace, la lunette et le fond de la montre, ainsi que d'éléments mobiles tels que la couronne et les boutons poussoir. Avec le temps et l'utilisation, les propriétés mécaniques des joints se modifient et l'étanchéité de la montre peut parfois se détériorer. La montre devient alors plus perméable à l'eau ou à la vapeur d'eau. Les conséquences peuvent être des phénomènes de condensation sur la face intérieure de la glace de la montre, ou pire, d'oxydation de certains composants métalliques ou de dégradation de certains composants polymères. Il existe ainsi un besoin de pouvoir surveiller de temps en temps le degré d'humidité relative dans la montre sans forcément devoir l'ouvrir, une ouverture de la boite de montre nécessitant un changement systématique des joints et faisant intervenir un horloger ce qui est coûteux. Un excès de vapeur d'eau dans la montre peut en effet indiquer qu'un ou plusieurs joints doivent être remplacés à court ou moyen terme.

Afin de répondre à ce besoin, il est connu des montres comportant un dispositif de mesure du degré d'humidité relative à l'intérieur de la montre. Un tel dispositif de mesure se présente sous la forme d'un module électronique apte à mesurer et enregistrer des valeurs de différents paramètres environnementaux, dont l'humidité relative. Du fait de la taille réduite d'un tel module électronique, ce dernier peut être agencé à l'intérieur d'une boîte de montre et mesurer, via un capteur dédié, le degré d'humidité relative à l'intérieur de la boîte de montre. Il est ensuite possible de transmettre les valeurs d'humidité relatives mesurées à une station d'accueil de la montre par voie sans fil, typiquement par voie infrarouge ou radiofréquences. Le signal par exemple infrarouge émis par le module électronique traverse alors une portion transparente de la boîte de montre, typiquement la glace et est reçu par un capteur infrarouge de la station d'accueil. Un utilisateur de la montre peut ensuite visualiser les valeurs d'humidité relative mesurées via un ordinateur relié à la station d'accueil et muni d'un logiciel dédié ou un smartphone.

Toutefois, un inconvénient d'un tel dispositif électronique de mesure est qu'il nécessite une batterie ou une pile pour pouvoir alimenter les différents composants électroniques. Un tel dispositif est ainsi très peu adapté à des montres mécaniques notamment. De plus, pour des montres prendre une pile de plus grande capacité et donc augmenter le volume de la montre.

Un autre inconvénient est qu'un tel dispositif est relativement encombrant et peu discret à l'intérieur de la montre. En outre, un tel dispositif électronique de mesure est relativement onéreux et impacte donc le coût de fabrication de la montre Il existe encore des dispositifs de mesure de l'humidité relative à l'intérieur de la montre tel que divulgué dans le document CN203191704U.

### RÉSUMÉ DE L'INVENTION

L'invention a donc pour but de fournir une montre de tout type, aussi bien mécanique qu'électronique ou encore hybride permettant de surveiller le degré d'humidité relative présent dans la boite de montre sans devoir l'ouvrir, tout en étant économique, simple à fabriquer, et permettant une mesure fiable et rapide du degré d'humidité relative à l'intérieur de la boite de montre.

A cet effet, l'invention concerne une montre qui comprend les caractéristiques mentionnées dans la revendication indépendante 1.

Des formes particulières de la montre sont définies dans les revendications dépendantes 2 à 15.

Un avantage d'une telle montre selon l'invention réside dans l'utilisation, à l'intérieur de la boîte de montre, d'un dispositif de mesure à fibre optique pour la mesure du degré d'humidité relative à l'intérieur de la montre. La fibre optique de mesure comporte une portion configurée pour que l'indice de réfraction de la portion change en présence de vapeur d'eau à l'intérieur de la boîte de montre. Une telle configuration permet d'interroger à distance la montre sans devoir l'ouvrir pour accéder à la mesure du degré d'humidité relative, en envoyant de la lumière à l'entrée de la fibre optique de mesure à travers une portion de la boite de montre laissant passer la lumière et en mesurant l'intensité de la lumière sortante. Du fait de l'utilisation d'une fibre optique pour la mesure, cette solution constitue une solution particulièrement simple et peu onéreuse pour la mesure du degré d'humidité relative à l'intérieur de la boite de montre. En outre, le dispositif de mesure à fibre optique est un système passif qui ne nécessite ni circuit électronique, ni batterie d'alimentation, et donc s'adapte à tout type de montre, notamment à une montre mécanique aussi bien qu'à une montre électronique ou hybride. De plus, les dimensions réduites de la fibre optique de mesure permettent une intégration discrète dans la boite de montre. Enfin, la mesure réalisée par le dispositif à fibre optique est au moins aussi fiable et plus rapide que celle réalisée par les dispositifs électroniques de mesure de l'art antérieur.

Selon un premier mode de réalisation de l'invention, ladite portion forme une partie intermédiaire de la fibre optique de mesure, située entre les deux extrémités de la fibre optique.

Selon un deuxième mode de réalisation de l'invention, ladite portion forme une extrémité libre de la fibre optique, ladite extrémité libre étant configurée optiquement de sorte à former une cavité Fabry-Pérot.

Selon une caractéristique technique particulière de l'invention, ladite portion de la fibre optique de mesure ne comporte pas de gaine optique.

Selon une autre caractéristique technique particulière de l'invention, ladite portion de la fibre optique de mesure comprend une couche externe dont l'indice de réfraction change en présence de vapeur d'eau.

Avantageusement, ladite couche externe comprend une superposition alternée de couches de polymères et de nanoparticules de dioxyde de silicium. Ceci permet de conférer à la couche externe de la portion de fibre optique de mesure des propriétés hydrophiles. L'indice de réfraction de la couche externe change ainsi en présence de vapeur d'eau dans l'environnement de la portion de fibre optique de mesure.

Avantageusement, selon le deuxième mode de réalisation de l'invention, ladite portion de la fibre optique de mesure présente une longueur sensiblement égale à 30 mm. Ceci permet d'obtenir une détectabilité fiable de l'humidité relative à l'intérieur de la boite de montre, pour une humidité relative comprise entre 10% et 100%.

A cet effet, l'invention concerne également un ensemble de mesure du degré d'humidité relative à l'intérieur d'une boite de montre, comprenant la montre décrite ci-dessus et un dispositif muni de moyens de détermination d'un degré d'humidité relative à partir d'un signal lumineux et de moyens d'émission et de réception de lumière reliés aux moyens de détermination, la boîte de montre étant munie d'une carrure et comprenant en outre une fenêtre de passage de lumière, le dispositif étant configuré pour émettre et recevoir de la lumière à travers la fenêtre de passage de lumière de la montre, la lumière circulant à travers la fibre optique de mesure.

Selon un exemple de réalisation préférentiel de l'invention, le dispositif est un dispositif portatif.

Avantageusement, le dispositif comprend en outre un détecteur électronique d'humidité relative, et des moyens de comparaison entre une valeur d'humidité relative déterminée par le détecteur électronique d'humidité relative et une valeur d'humidité relative déterminée par les moyens de détermination d'un degré d'humidité relative à partir d'un signal lumineux. Ceci permet de comparer la valeur de l'humidité relative mesurée à l'intérieur de la boite de montre à la valeur de l'humidité relative ambiante, et d'ainsi améliorer la fiabilité de la mesure. En effet, le taux d'humidité dans la montre est en général en équilibre avec le taux d'humidité ambiant. Si les moyens de détermination d'un degré d'humidité relative indiquent un taux d'humidité interne plus élevé que le taux d'humidité ambiant mesuré par le détecteur électronique, cela indique qu'il y a un excès de vapeur d'eau dans la boite de montre. Dans le cas où le porteur passe d'un environnement peu humide à un environnement très humide, par exemple en sortant d'un avion dans un pays tropical, il peut être nécessaire d'attendre que l'équilibre entre l'intérieur et l'extérieur de la montre se fasse avant de faire des mesures qui pourraient être faussées.

### BRÈVE DESCRIPTION DES FIGURES

Les buts, avantages et caractéristiques de la montre selon l'invention, ainsi que dans l'ensemble de mesure du degré d'humidité relative la comprenant, apparaîtront mieux dans la description suivante sur la base d'au moins une forme d'exécution non limitative illustrée par les dessins sur lesquels :
- la figure 1 est une vue schématique en coupe partielle d'un ensemble de mesure du degré d'humidité relative, comprenant une montre selon l'invention, la montre comprenant une boite de montre et un dispositif à fibre optique de mesure du degré d'humidité relative à l'intérieur de la boite de montre ;
- la figure 2 est une vue en coupe, prise selon un plan de coupe II-II, de la montre de la figure 1 selon un premier mode de réalisation de l'invention ;
- la figure 3 est une vue en coupe, prise selon un plan de coupe III-III, de la montre de la figure 1 selon un deuxième mode de réalisation de l'invention ; et
- la figure 4 est une vue schématique représentant des étapes de traitement d'une partie de la fibre optique du dispositif de mesure du degré d'humidité relative de la figure 1.

### DESCRIPTION DETAILLEE DE L'INVENTION

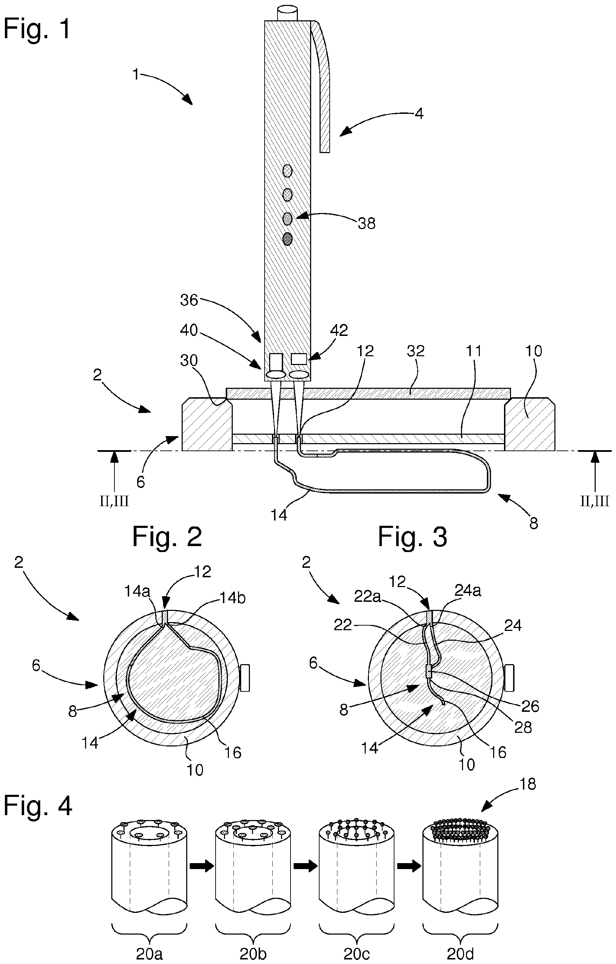

La figure 1 représente un ensemble 1 de mesure du degré d'humidité relative à l'intérieur d'une montre 2. Par « degré d'humidité relative » on entend dans la présente invention « le rapport entre la pression partielle de la vapeur d'eau contenue dans l'air et la pression de vapeur saturante (ou tension de vapeur) à la même température ». Autrement dit, la mesure du degré d'humidité relative correspond à une mesure du rapport entre le contenu en vapeur d'eau de l'air et sa capacité maximale à en contenir dans les mêmes conditions de température.

L'ensemble 1 comprend la montre 2, ainsi qu'un dispositif extérieur 4 apte à émettre un signal lumineux à destination de la montre 2. La montre 2 peut être une montre de tout type, telle que par exemple une montre mécanique ou encore une montre électronique.

La montre 2 est munie d'une boîte de montre 6. La boîte de montre 6 comporte un dispositif 8 de mesure du degré d'humidité relative à l'intérieur de la montre 2. La boîte de montre 6 comprend également une carrure 10, le dispositif de mesure 8 étant par exemple agencé à l'intérieur de la carrure 10, comme illustré sur les figures 1 à 3. De préférence, la boîte de montre 6 renferme un cadran 11 et des moyens d'affichage de l'heure (ces derniers n'étant pas représentés sur les figures pour des raisons de clarté). De préférence encore, la boîte de montre 6 est munie en outre d'une fenêtre 12 de passage de lumière.

Le dispositif de mesure 8 est un dispositif à fibre optique comprenant une fibre optique de mesure 14. La fibre optique de mesure 14 comporte une portion 16 configurée pour que l'indice de réfraction de la portion 16 change en présence de vapeur d'eau à l'intérieur de la boîte de montre 6. Pour ce faire, selon un exemple de réalisation particulier de l'invention, cette portion 16 de la fibre optique de mesure 14 est par exemple dépouillée de gaine optique. La portion 16 de fibre optique comprend, à la place de la gaine optique, une couche externe 18 dont l'indice de réfraction change en présence de vapeur d'eau. De préférence, la couche externe 18 comprend par exemple une superposition alternée de couches de polymères et de nanoparticules de dioxyde de silicium. Ceci confère à la couche externe 18 de la portion 16 de fibre optique des propriétés hydrophiles, et permet d'obtenir, en présence de vapeur d'eau, le changement d'indice de réfraction évoqué plus haut. Un procédé de formation d'une telle couche externe 18 est illustré à la figure 4, et va maintenant être décrit en référence à cette figure.

On suppose que la portion 16 de fibre optique a été préalablement dépouillée de gaine optique.

Au cours d'une première étape 20a, la portion dépouillée 16 de fibre optique est traitée par hydroxylation, dans le but d'activer la surface du cœur de fibre et de la préparer aux dépôts de couches suivants. L'hydroxylation consiste par exemple en un traitement de la surface de la portion dépouillée 16 de fibre optique avec une solution d'hydroxyde de potassium éthanolique.

Au cours d'une étape suivante 20b, une première couche de polymère est déposée sur la portion dépouillée 16 de la fibre optique. Le polymère déposé est typiquement un polymère chargé positivement, par exemple un polycation. Un tel polycation est par exemple le poly (allylaminehydrochloride) ; aussi appelé PAH. Le dépôt est alors effectué par immersion de la portion 16 de fibre dans le polymère, typiquement le polycation PAH.

Au cours d'une étape suivante 20c, une première couche de nanoparticules est déposée sur la première couche de polymère. Les nanoparticules déposées sont typiquement des nanoparticules chargées négativement, par exemples des nanoparticules de dioxyde de silicium. Le dépôt est alors effectué par immersion de la portion 16 de fibre dans une solution contenant les nanoparticules.

Au cours d'une étape finale 20d, les étapes de dépôt 20b et 20c sont répétées en vue d'obtenir le nombre de couches alternées désiré.

Le procédé est ainsi un procédé de formation couches par couches, pour obtenir la superposition alternée de couches de polymères et de nanoparticules de dioxyde de silicium sur la fibre optique 14. Il est à noter que les étapes successives 20a à 20d peuvent être séparées entre elles par des sous-étapes de lavage et de séchage /polymérisation des couches.

Dans un premier mode de réalisation de l'invention, représenté sur la figure 2, la portion 16 forme une partie intermédiaire de la fibre optique de mesure 14, située entre les deux extrémités 14a, 14b de la fibre optique. Le dispositif de mesure 8 est agencé à l'intérieur de la carrure 10 de la boîte de montre 6. Les deux extrémités 14a, 14b de la fibre optique de mesure 14 sont agencées en regard de la fenêtre de passage de lumière 12, comme illustré sur les figures 1 et 2. De préférence, selon ce premier mode de réalisation, et lorsque la couche externe 18 de la portion intermédiaire 16 présente la superposition alternée de couches de polymères et de nanoparticules de dioxyde de silicium décrite précédemment, la portion intermédiaire 16 présente une longueur sensiblement égale à 30 mm. En présence de vapeur d'eau, l'indice de réfraction de la couche externe 18 de la portion 16 augmente et la partie évanescente de la lumière guidée dans la fibre optique 14 pénètre toujours plus dans la couche 18. Par conséquent, l'intensité de la lumière détectée à la sortie de la fibre optique 14 est modulée par la présence de vapeur d'eau autour de la portion intermédiaire 16.

Dans un deuxième mode de réalisation de l'invention, représenté sur la figure 3, la portion 16 forme une extrémité libre de la fibre optique de mesure 14. Cette extrémité libre 16 est configurée optiquement de sorte à former une cavité Fabry-Pérot. Pour ce faire, une possibilité consiste en la configuration particulière de la couche externe 18 de l'extrémité libre 16 décrite précédemment, à savoir la superposition alternée de couches de polymères et de nanoparticules de dioxyde de silicium. En effet, ce dépôt multicouche se comporte optiquement comme une cavité Fabry-Pérot, dont la réflectivité change avec l'indice de réfraction, ce dernier étant à son tour influencé par le degré d'humidité dans l'environnement de la fibre optique. Selon ce deuxième mode de réalisation, le dispositif de mesure 8 comprend en outre une fibre optique d'entrée de lumière 22, une fibre optique de sortie de lumière 24, et un coupleur optique 26 couplant la fibre optique d'entrée de lumière 22 à la fibre optique de sortie de lumière 24. L'autre extrémité 28 de la fibre optique de mesure 14, opposée à l'extrémité libre 16, est connectée au coupleur optique 26. Le dispositif de mesure 8 est agencé à l'intérieur de la carrure 10 de la boîte de montre 6. Les extrémités libres respectives 22a, 24a des fibres optiques d'entrée et de sortie de lumière 22, 24 sont agencées en regard de la fenêtre de passage de lumière 12, comme illustré sur la figure 3. Comme cela sera détaillé par la suite, la fibre optique d'entrée 22 permet d'injecter de la lumière dans le dispositif de mesure 8, et la fibre optique de sortie 24 permet de mesurer l'intensité de la lumière qui est réfléchie par la cavité Fabry-Pérot.

En revenant à la figure 1, la carrure 10 est par exemple de forme annulaire et est munie d'un rebord annulaire supérieur 30 sur lequel s'appuie une glace 32. Dans la boîte de montre 6 prise en exemple aux figures 1 à 3, la configuration de la boîte de montre est sensiblement circulaire. Toutefois, l'invention n'est nullement limitée à une telle configuration de la boîte de montre, ni aux autres dispositions décrites ci-dessus pour la carrure 10.

Selon un premier exemple de réalisation illustré sur les figures 2 et 3, et qui peut s'appliquer au premier comme au deuxième modes de réalisation détaillés ci-dessus, la fenêtre 12 de passage de lumière est usinée dans la carrure 10 de la boîte de montre 6. De préférence, la fenêtre 12 est alors constituée d'un matériau étanche translucide, tel que par exemple du verre minéral ou du saphir.

Selon un deuxième exemple de réalisation illustré sur la figure 1, et qui peut s'appliquer au premier comme au deuxième mode de réalisation détaillés ci-dessus, la fenêtre 12 de passage de lumière est usinée à travers le cadran 11 de la boîte de montre 6 et est agencée en regard de la glace 32. Dans ce cas, la fenêtre 12 est par exemple constituée d'une ouverture pratiquée à travers le cadran 11.

Le dispositif extérieur 4 comprend des moyens de détermination d'un degré d'humidité relative à partir d'un signal lumineux, et des moyens 36 d'émission et de réception de lumière reliés aux moyens de détermination. Les moyens de détermination ne sont pas représentés sur les figures pour des raisons de clarté. De préférence, le dispositif extérieur 4 comprend en outre un détecteur électronique d'humidité relative et des moyens de comparaison, ces éléments n'étant pas représentés sur les figures. Les moyens de comparaison sont reliés au détecteur électronique d'humidité relative et aux moyens de détermination d'un degré d'humidité relative à partir d'un signal lumineux. Les moyens de comparaison sont configurés pour comparer une valeur d'humidité relative déterminée par le détecteur électronique d'humidité relative et une valeur d'humidité relative déterminée par les moyens de détermination d'un degré d'humidité relative à partir d'un signal lumineux. De préférence encore, le dispositif 4 comprend en outre des moyens d'affichage 38, reliés aux moyens de détermination d'un degré d'humidité relative à partir d'un signal lumineux et/ou aux moyens de comparaison.

Le dispositif extérieur 4 est configuré pour émettre et recevoir de la lumière à travers la fenêtre 12 de passage de lumière de la montre 2. Selon un exemple de réalisation préférentiel, illustré sur la figure 1, le dispositif extérieur 4 est un dispositif portatif, c'est-à-dire un dispositif apte à être porté par un utilisateur sans nécessiter de raccordement filaire pour son alimentation électrique. Comme représenté sur la figure 1, le dispositif portatif 4 présente par exemple une forme de stylo, la pointe du stylo renfermant les moyens 36 d'émission et de réception de lumière.

Les moyens de détermination d'un degré d'humidité relative à partir d'un signal lumineux comportent par exemple des moyens de traitement, tels qu'une puce électronique, et des moyens mémoire reliés aux moyens de traitement. Les moyens mémoire stockent par exemple une ou plusieurs tables de correspondance entre des valeurs d'intensité lumineuse et des valeurs de degré d'humidité relative associées

Comme illustré sur la figure 1, les moyens 36 d'émission et de réception de lumière comportent par exemple une source de lumière focalisée 40 apte à émettre de la lumière vers la montre 2 à travers la fenêtre 12 de passage de lumière, et un capteur de lumière 42 apte à recevoir, à travers la fenêtre 12, la lumière de sortie ayant circulé au sein de la fibre optique de mesure 14.

Les moyens d'affichage 38 sont aptes à afficher plusieurs signaux visuels distincts en fonction de la valeur du degré d'humidité relative déterminée par les moyens de détermination, ou en fonction du résultat de la comparaison effectuée par les moyens de comparaison. Chaque signal visuel affiché par les moyens d'affichage 38 correspond alors, selon les cas, à une valeur de degré d'humidité relative prédéterminée, ou à une valeur différentielle d'humidité relative prédéterminée. Comme illustré sur la figure 1, les moyens d'affichage 38 sont par exemple constitués d'un indicateur lumineux à diodes électroluminescentes, l'allumage d'une diode donnée correspondant à un seuil d'humidité relative prédéterminé. Les moyens d'affichage 38 fournissent ainsi un retour visuel à l'utilisateur, lui indiquant le degré d'humidité relative au sein de la montre 2.

Le fonctionnement de l'ensemble 1 de mesure du degré d'humidité relative à l'intérieur d'une montre 2 va maintenant être décrit. Une fois le dispositif extérieur 4 positionné en regard de la fenêtre 12 de passage de lumière de la montre 2, un utilisateur de l'ensemble 1 actionne les moyens 36 d'émission et de réception de lumière. En particulier, dans l'exemple illustratif de la figure 1, l'utilisateur actionne la source de lumière focalisée 40. Ceci permet d'injecter de la lumière d'entrée à l'intérieur de la boîte de montre 6, notamment à l'intérieur de la fibre optique de mesure 14. Dans le deuxième mode de réalisation de l'invention illustré sur la figure 3, la lumière d'entrée circule d'abord à l'intérieur de la fibre optique d'entrée 22. La lumière circule ensuite à l'intérieur de la fibre optique de mesure 14, est réfléchie en arrière par la cavité Fabry-Pérot formée par l'extrémité libre 16, puis se dirige dans la fibre optique de sortie 24, en passant à travers le coupleur optique 26.

La lumière ayant circulé dans la fibre optique de mesure 14 est ensuite reçue par les moyens 36 d'émission et de réception de lumière. En particulier, dans l'exemple illustratif de la figure 1, la lumière de sortie est reçue par le capteur de lumière 42.

Une telle configuration selon l'invention permet donc d'accéder à la mesure du degré d'humidité relative dans la boite de montre sans devoir l'ouvrir, en envoyant de la lumière à l'entrée de la fibre optique de mesure et en mesurant l'intensité de la lumière sortante.

On notera encore que selon une variante non représentée, on peut prévoir qu'au moins les moyens d'affichage du degré d'humidité relative soient intégrés dans la boite de montre, la source de lumière pouvant par exemple être formée par la lumière du flash d'un smartphone.

## Revendications

1. Montre (2) comprenant une boîte de montre (6), la boîte de montre (6) comportant un dispositif (8) de mesure du degré d'humidité relative à l'intérieur de la montre (2) ;
**caractérisée en ce que** le dispositif (8) de mesure du degré d'humidité relative est un dispositif à fibre optique comprenant une fibre optique de mesure (14), ladite fibre optique (14) comportant une portion (16) configurée pour que l'indice de réfraction de ladite portion (16) change en présence de vapeur d'eau à l'intérieur de la boîte de montre (6).

2. Montre (2) selon la revendication 1, **caractérisée en ce que** ladite portion (16) forme une partie intermédiaire de la fibre optique de mesure (14), située entre les deux extrémités (14a, 14b) de la fibre optique (14).

3. Montre (2) selon la revendication 1, **caractérisée en ce que** ladite portion (16) forme une extrémité libre de la fibre optique (14), ladite extrémité libre (16) étant configurée optiquement de sorte à former une cavité Fabry-Pérot.

4. Montre (2) selon la revendication 3, **caractérisée en ce que** le dispositif (8) de mesure du degré d'humidité relative comprend en outre une fibre optique d'entrée de lumière (22), une fibre optique de sortie de lumière (24), et un coupleur optique (26) couplant la fibre optique d'entrée de lumière (22) à la fibre optique de sortie de lumière (24) ; l'autre extrémité (28) de la fibre optique de mesure (14) étant connectée au coupleur optique (26).

5. Montre (2) selon l'une quelconque des revendications précédentes, **caractérisée en ce que** ladite portion (16) de la fibre optique de mesure (14) est dépouillée de gaine optique.

6. Montre (2) selon la revendication 5, **caractérisée en ce que** ladite portion (16) de la fibre optique de mesure (14) comprend une couche externe (18) dont l'indice de réfraction change en présence de vapeur d'eau.

7. Montre (2) selon la revendication 6, **caractérisée en ce que** ladite couche externe (18) comprend une superposition alternée de couches de polymères et de nanoparticules de dioxyde de silicium.

8. Montre (2) selon l'une des revendications 5 à 7 lorsqu'elle dépend de la revendication 2, **caractérisée en ce que** ladite portion (16) de la fibre optique de mesure (14) présente une longueur sensiblement égale à 30 mm.

9. Montre (2) selon l'une quelconque des revendications précédentes, **caractérisée en ce que** la boîte de montre (6) est munie d'une carrure (10) et comprend en outre une fenêtre (12) de passage de lumière.

10. Montre (2) selon la revendication 9, **caractérisée en ce que** la fenêtre (12) de passage de lumière est usinée dans la carrure (10).

11. Montre (2) selon la revendication 10, **caractérisée en ce que** la fenêtre (12) de passage de lumière est constituée d'un matériau étanche translucide.

12. Montre (2) selon la revendication 9, **caractérisée en ce que** la boîte de montre (6) renferme un cadran (11) et est munie d'une glace (32) de fermeture de la carrure (10) ; la fenêtre (12) de passage de lumière étant usinée à travers le cadran (11) et étant agencée en regard de la glace (32).

13. Montre (2) selon la revendication 12, **caractérisée en ce que** la fenêtre (12) de passage de lumière est constituée d'une ouverture pratiquée à travers le cadran (11).

14. Montre (2) selon l'une des revendications 10 à 13 lorsqu'elle dépend de la revendication 4, **caractérisée en ce que** le dispositif (8) de mesure du degré d'humidité relative est agencé à l'intérieur de la carrure (10) de la boîte de montre (6), les extrémités libres respectives (22a, 24a) des fibres optiques d'entrée et de sortie de lumière (22, 24) étant agencées en regard de la fenêtre (12) de passage de lumière.

15. Montre (2) selon l'une des revendications 10 à 13 lorsqu'elle dépend de la revendication 2, **caractérisée en ce que** le dispositif (8) de mesure du degré d'humidité relative est agencé à l'intérieur de la carrure (10) de la boîte de montre (6), les deux extrémités (14a, 14b) de la fibre optique de mesure (14) étant agencées en regard de la fenêtre (12) de passage de lumière.

16. Ensemble (1) de mesure du degré d'humidité relative à l'intérieur d'une montre (2), comprenant une montre (2) et un dispositif (4) muni de moyens de détermination d'un degré d'humidité relative à partir d'un signal lumineux et de moyens (36) d'émission et de réception de lumière reliés aux moyens de détermination, **caractérisé en ce que** la montre (2) est conforme à l'une quelconque des revendications 9 à 15, le dispositif (4) étant configuré pour émettre et recevoir de la lumière à travers la fenêtre (12) de passage de lumière de la montre (2), la lumière circulant à travers la fibre optique de mesure (14).

17. Ensemble (1) selon la revendication 16, **caractérisé en ce que** le dispositif (4) est un dispositif portatif.

18. Ensemble (1) selon la revendication 17, **caractérisé en ce que** le dispositif portatif (4) présente une forme de stylo.

19. Ensemble (1) selon l'une des revendications 16 à 18, **caractérisé en ce que** les moyens (36) d'émission et de réception de lumière comprennent une source de lumière focalisée (40) et un capteur de lumière (42).

20. Ensemble (1) selon l'une des revendications 16 à 19, **caractérisé en ce que** le dispositif (4) comprend en outre un détecteur électronique d'humidité relative, et des moyens de comparaison entre une valeur d'humidité relative déterminée par le détecteur électronique d'humidité relative et une valeur d'humidité relative déterminée par les moyens de détermination d'un degré d'humidité relative.

21. Ensemble (1) selon la revendication 20, **caractérisé en ce que** le dispositif (4) comprend en outre des moyens d'affichage (38) aptes à afficher plusieurs signaux visuels distincts en fonction du résultat de la comparaison, chaque signal visuel correspondant à une valeur différentielle d'humidité relative prédéterminée.

## Patentansprüche

1. Tragbare Uhr (2), umfassend ein Uhrengehäuse (6), wobei das Uhrengehäuse (6) eine Vorrichtung (8) zum Messen der relativen Luftfeuchtigkeit im Inneren der tragbaren Uhr (2) enthält;
**dadurch gekennzeichnet, dass** die Vorrichtung (8) zum Messen der relativen Luftfeuchtigkeit eine faseroptische Vorrichtung ist, die eine Mess-Lichtleitfaser (14) aufweist, wobei die Lichtleitfaser (14) einen Abschnitt (16) besitzt, der so konfiguriert ist, dass sich der Brechungsindex des Abschnitts (16) in Gegenwart von Wasserdampf im Inneren des Uhrengehäuses (6) ändert.

2. Tragbare Uhr (2) nach Anspruch 1, **dadurch gekennzeichnet, dass** der Abschnitt (16) einen Zwischenteil der Mess-Lichtleitfaser (14) bildet, der sich zwischen den beiden Enden (14a, 14b) der Lichtleitfaser (14) befindet.

3. Tragbare Uhr (2) nach Anspruch 1, **dadurch gekennzeichnet, dass** der Abschnitt (16) ein freies Ende der Lichtleitfaser (14) bildet, wobei das freie Ende (16) optisch so konfiguriert ist, dass es eine Fabry-Perot-Kavität bildet.

4. Tragbare Uhr (2) nach Anspruch 3, **dadurch gekennzeichnet, dass** die Vorrichtung (8) zum Messen der relativen Luftfeuchtigkeit ferner eine Lichteintritts-Lichtleitfaser (22), eine Lichtaustritts-Lichtleitfaser (24) und einen optischen Koppler (26) umfasst, der die Lichteintritts-Lichtleitfaser (22) mit der Lichtaustritts-Lichtleitfaser (24) koppelt; wobei das andere Ende (28) der Mess-Lichtleitfaser (14) mit dem optischen Koppler (26) verbunden ist.

5. Tragbare Uhr (2) nach einem der vorhergehenden Ansprüche, **dadurch gekennzeichnet, dass** der Abschnitt (16) der Mess-Lichtleitfaser (14) keine optische Verkleidung besitzt.

6. Tragbare Uhr (2) nach Anspruch 5, **dadurch gekennzeichnet, dass** der Abschnitt (16) der Mess-Lichtleitfaser (14) eine äußere Schicht (18) aufweist, deren Brechungsindex sich in Gegenwart von Wasserdampf ändert.

7. Tragbare Uhr (2) nach Anspruch 6, **dadurch gekennzeichnet, dass** die äußere Schicht (18) eine alternierende Überlagerung von Schichten aus Polymeren und Siliziumdioxid-Nanopartikeln aufweist.

8. Tragbare Uhr (2) nach einem der Ansprüche 5 bis 7, wenn abhängig von Anspruch 2, **dadurch gekennzeichnet, dass** der Abschnitt (16) der Mess-Lichtleitfaser (14) eine Länge besitzt, die im Wesentlichen 30 mm beträgt.

9. Tragbare Uhr (2) nach einem der vorhergehenden Ansprüche, **dadurch gekennzeichnet, dass** das Uhrengehäuse (6) mit einem Gehäusemittelteil (10) ausgestattet ist und weiterhin ein Fenster (12) für den Durchgang von Licht aufweist.

10. Tragbare Uhr (2) nach Anspruch 9, **dadurch gekennzeichnet, dass** das Lichtdurchlassfenster (12) in den Gehäusemittelteil (10) eingearbeitet ist.

11. Tragbare Uhr (2) nach Anspruch 10, **dadurch gekennzeichnet, dass** das Lichtdurchlassfenster (12) aus einem lichtdurchlässigen, dichten Material hergestellt ist.

12. Tragbare Uhr (2) nach Anspruch 9, **dadurch gekennzeichnet, dass** das Uhrengehäuse (6) ein Zifferblatt (11) umschließt und mit einem Uhrenglas (32) zum Verschließen des Gehäusemittelteils (10) versehen ist; wobei das Lichtdurchlassfenster (12) durch das Zifferblatt (11) hindurchgearbeitet ist und gegenüber dem Uhrenglas (32) angeordnet ist.

13. Tragbare Uhr (2) nach Anspruch 12, **dadurch gekennzeichnet, dass** das Lichtdurchlassfenster (12) durch eine Öffnung durch das Zifferblatt (11) gebildet ist.

14. Tragbare Uhr (2) nach einem der Ansprüche 10 bis 13, wenn abhängig von Anspruch 4, **dadurch gekennzeichnet, dass** die Vorrichtung (8) zum Messen der relativen Luftfeuchtigkeit im Inneren des Gehäusemittelteils (10) des Uhrengehäuses (6) angeordnet ist, wobei die jeweiligen freien Enden (22a, 24a) der Lichteintritts- bzw. Lichtaustritts-Lichtleitfasern (22, 24) gegenüber dem Lichtdurchlassfenster (12) angeordnet sind.

15. Tragbare Uhr (2) nach einem der Ansprüche 10 bis 13, wenn abhängig von Anspruch 2, **dadurch gekennzeichnet, dass** die Vorrichtung (8) zum Messen der relativen Luftfeuchtigkeit im Inneren des Gehäusemittelteils (10) des Uhrengehäuses (6) angeordnet ist, wobei die beiden Enden (14a, 14b) der Mess-Lichtleitfaser (14) gegenüber dem Lichtdurchlassfenster (12) angeordnet sind.

16. Baugruppe (1) zum Messen der relativen Luftfeuchtigkeit im Inneren einer Uhr (2), umfassend eine Uhr (2) und eine Vorrichtung (4), die ausgestattet ist mit Mitteln zum Bestimmen der relativen Luftfeuchtigkeit anhand eines Lichtsignals und mit Mitteln (36) zum Aussenden und Empfangen von Licht, die mit den Bestimmungsmitteln verbunden sind, **dadurch gekennzeichnet, dass** die tragbare Uhr (2) eine Uhr nach einem der Ansprüche 9 bis 15 ist, wobei die Vorrichtung (4) konfiguriert ist, um Licht durch das Lichtdurchlassfenster (12) der tragbaren Uhr (2) auszusenden und zu empfangen, wobei das Licht durch die Mess-Lichtleitfaser (14) verläuft.

17. Baugruppe (1) nach Anspruch 16, **dadurch gekennzeichnet, dass** die Vorrichtung (4) eine tragbare Vorrichtung ist.

18. Baugruppe (1) nach Anspruch 17, **dadurch gekennzeichnet, dass** die tragbare Vorrichtung (4) die Form eines Stifts aufweist.

19. Baugruppe (1) nach einem der Ansprüche 16 bis 18, **dadurch gekennzeichnet, dass** die Mittel (36) zum Aussenden und Empfangen von Licht eine fokussierte Lichtquelle (40) und einen Lichtsensor (42) umfassen.

20. Baugruppe (1) nach einem der Ansprüche 16 bis 19, **dadurch gekennzeichnet, dass** die Vorrichtung (4) ferner einen elektronischen Detektor für die relative Luftfeuchtigkeit und Mittel zum Vergleichen eines durch den elektronischen Detektor für die relative Luftfeuchtigkeit bestimmten Wertes der relativen Luftfeuchtigkeit mit einem Wert der relativen Luftfeuchtigkeit, der durch die Mittel zum Bestimmen der relativen Luftfeuchtigkeit bestimmt wird, umfasst.

21. Baugruppe (1) nach Anspruch 20, **dadurch gekennzeichnet, dass** die Vorrichtung (4) ferner Anzeigemittel (38) umfasst, die geeignet sind, abhängig vom Ergebnis des Vergleichs mehrere verschiedene visuelle Signale anzuzeigen, wobei jedes visuelle Signal einem vorgegebenen differenziellen Wert der relativen Luftfeuchtigkeit entspricht.

## Claims

1. Watch (2) including a watch case (6), wherein the watch case (6) includes a device (8) for measuring the degree of relative humidity inside the watch (2);
**characterized in that** the device (8) for measuring the degree of relative humidity is a fibre optic device including a measuring optical fibre (14), said optical fibre (14) including a portion (16) configured such that the refractive index of said portion (16) changes in the presence of water vapour inside the watch case (6).

2. Watch (2) according to claim 1, **characterized in that** said said portion (16) forms an intermediate part of the measuring optical fibre (14), located between the two ends (14a, 14b) of the optical fibre (14).

3. Watch (2) according to claim 1, **characterized in that** said portion (16) forms a free end of the optical fibre (14), said free end (16) being optically configured to form a Fabry-Perot cavity.

4. Watch (2) according to claim 3, **characterized in that** the device (8) for measuring the degree of relative humidity further includes a light input optical fibre (22), a light output optical fibre (24), and an optical coupler (26) coupling the light input optical fibre (22) to the light output optical fibre (24); the other end (28) of the measuring optical fibre (14) being connected to the optical coupler (26).

5. Watch (2) according to any of the preceding claims, **characterized in that** said portion (16) of the measuring optical fibre (14) is stripped of its optical sheath.

6. Watch (2) according to claim 5, **characterized in that** said portion (16) of the measuring optical fibre (14) includes an external layer (18) whose refractive index changes in the presence of water vapour.

7. Watch (2) according to claim 6, **characterized in that** said external layer (18) includes an alternate superposition of layers of polymers and of silicon dioxide nanoparticles.

8. Watch (2) according to any of claims 5 to 7 when it depends on claim 2, **characterized in that** said portion (16) of the measuring optical fibre (14) has a length substantially equal to 30mm.

9. Watch according to any of the preceding claims, **characterized in that** the watch case (6) is provided with a case middle (10) and further includes a light transmission window (12).

10. Watch (2) according to claim 9, **characterized in that** the light transmission window (12) is machined in the case middle (10).

11. Watch (2) according to claim 10, **characterized in that** the light transmission window (12) is formed of a translucent water resistant material.

12. Watch (2) according to claim 9, **characterized in that** the watch case (6) contains a dial (11) and is provided with a crystal (32) closing the case middle (10); the light transmission window (12) being machined through the dial (11) and being arranged facing the crystal (32).

13. Watch (2) according to claim 12, **characterized in that** the light transmission window (12) is formed of an aperture made through the dial (11).

14. Watch (2) according to any of claims 10 to 13 when it depends on claim 4, **characterized in that** the device (8) for measuring the degree of relative humidity is arranged inside the middle part (10) of the watch case (6), the respective free ends (22a, 24a) of the light input and output optical fibres (22, 24) being arranged facing the light transmission window (12).

15. Watch (2) according to any of claims 10 to 13 when it depends on claim 2, **characterized in that** the device (8) for measuring the degree of relative humidity is arranged inside the middle part (10) of the watch case (6), the two ends (14a, 14b) of the measuring optical fibre (14) being arranged facing the light transmission window (12).

16. Assembly (1) for measuring the degree of relative humidity inside a watch (2), including a watch (2) and a device (4) equipped with means for determining a degree of relative humidity from a light signal and light emitting and receiving means (36) connected to the determining means, **characterized in that** the watch (2) conforms to any of claims 9 to 15, the device (4) being configured to emit and receive light through the light transmission window (12) of the watch (2), the light flowing through the measuring optical fibre (14).

17. Assembly (1) according to claim 16, **characterized in that** the device (4) is a portable device.

18. Assembly (1) according to claim 17, **characterized in that** the portable device (4) has a pen shape.

19. Assembly (1) according to any of claims 16 to 18, **characterized in that** the light emitting and receiving means (36) include a focused light source (40) and a light sensor (42).

20. Assembly (1) according to any of claims 16 to 19, **characterized in that** the device (4) further includes an electronic relative humidity sensor, and means of comparison between a relative humidity value determined by the electronic relative humidity sensor and a relative humidity value determined by the means for determining a degree of relative humidity from a light signal.

21. Assembly (1) according to claim 20, **characterized in that** the device (4) further includes display means (38) able to display several distinct visual signals as a function of the result of the comparison, each visual signal corresponding to a predetermined differential value of relative humidity.
